# EUROPEAN PATENT SPECIFICATION

(11) **EP 1 083 007 B1**
(45) Date of publication and mention of the grant of the patent: **04.04.2007**
(21) Application number: 00307695.7
(22) Date of filing: 06.09.2000
(51) Int. Cl.: B07C 5/342

(54) **Method and apparatus for sorting granular objects with at least two different threshold levels**
Verfahren und Vorrichtung zum Sortieren von körnigen Objekten mit mindestens zwei verschiedene Schwellwerten
Procédé et dispositif de tri d'objets granulaires avec au moins deux différents niveaux de seuil

(30) Priority: 10.09.1999 JP 25790899
(43) Date of publication of application: 14.03.2001
(73) Proprietor: SATAKE CORPORATION, Chiyoda-ku, Tokyo 101-0021 (JP)
(72) Inventor: Satake, Satoru, Oota-ku, Tokyo 143-0023 (JP); Ito, Takafumi, Chiyoda-ku, Tokyo 101-0021 (JP); Egi, Masahiro, Chiyoda-ku, Tokyo 101-0021 (JP)
(74) Representative: Hallybone, Huw George

(56) References cited:
- EP-A- 0 342 354
- GB-A- 2 180 060
- US-A- 4 207 985
- PATENT ABSTRACTS OF JAPAN vol. 1996, no. 06, 28 June 1996 (1996-06-28) & JP 08 035940 A (KIYOORITSU TEC:KK), 6 February 1996 (1996-02-06)

## Description

### BACKGROUND OF THE INVENTION

### (1) Field of the invention

The invention relates to a sorting apparatus for granular objects, and more particularly to a sorting method and apparatus for granular objects in which image signals obtained by a solid-state image device, for example, a CCD sensor from each material to be sorted are image-processed, and the sorting is conducted by specifying the objects to be sorted among a number of objects.

### (2) Description of the Related Art

The technique has been known for sorting defective granular objects with which the defective portion is detected by image-taking the moving granular objects by a camera equipped with a CCD sensor, and the quantity of light for each image element of the image-taken granular object is binarized at a predetermined threshold. This technique is applied not limited to the sorting of the granular objects, and is applied to the sorting of wood-related materials as disclosed in Japanese Patent Kokai Publication No. Hei 8-35940, and to the sorting of bottles as disclosed in Japanese Patent Kokai Publication No. Hei 9-203614.

In recent years, the resolution power (number of image elements or pixels) of the CCD sensor has improved thus enabling to detect differences in fine colors and in degrees of the quantity of light and, in addition to the precision, has remarkably improved processing speeds. Especially, for granular objects, such as rice grains and pellets of plastic materials each of which is small in size, the improved CCD sensor is effective. In the rice grain, a color may be caused to occur due to damage during the growth and, in the pellets, a color may be present due to the mixing-in of impurity or foreign objects. The colored portion of such nature may have a width or a diameter of from several mm to 1/10mm or less. There are also differences in the heaviness of colors at the colored portions, and the heaviness of the colors varies from one which has influence to the value of the product and to one which has no influence to the value itself of the product.

The improvement in the resolution power has contributed to enable the discrimination of granular objects which could not have been discriminated readily by the human eyes. Especially, it has become possible to sort out a small but a heavy color which was difficult to sort conventionally. On the other hand, a rice grain or a pellet having not too heavy color and a size thereof which do not have direct or substantial influence to the quality is sensed and is sorted out, resulting in lowering of the sorting yield, or unfavorably in mixing a large number of acceptable objects into unacceptable objects. Under the circumstance, one solution is to change the threshold value but, when such change is made simply to the level of the heavier side of color, the sorting standard is changed based on the heaviness without regard to the size (area) of the colored portion, so that the color which is light in the heaviness but which extends wide in the size is outside the subject of sorting. However, here a problem arises that, even when the color is light in the heaviness, if the size thereof is large, the product value is affected so that it is desired to sort out the grain having such color.

The above results from the improvement in the resolution power of the image-taking device, and the problem is eased if the resolution power is lowered as in the conventional technique. However, in such a case, the detection of a small size color becomes difficult so that the desire that the color which is small size but is heavy must be subject of the sorting out is not satisfied.

Further, in the conventional sorting, the sorting action aims at the colored portion itself so that, when the colored portion present at an end or peripheral portion of the granular object, the sorting action aiming at the colored portion results in not only being unable to perform precise ejection of the subject granular object but also in unfavorably ejecting other granular objects which are moving continuously together with the subject granular objects. This not only causes the sorting yield to be lowered but also becomes a cause for increasing the rate of acceptable products mixed into the unacceptable products.

US 4,207,985 discloses apparatus for sorting articles including a circuit arrangement responsive to first and second electrical signals representative of the light reflected from the same portion of the article to be sorted as detected against a first and a second background, the first background having a reflectivity characteristic greater than the reflectivity characteristic of the second background, to generate an electrical signal representation of the portion of the viewing zone occupied by the article. This signal is used to scale both the first and second signals to provide an electrical signal representation of the reflectivity of the article at the first and second color wavelengths. The apparatus is further characterized by an article classifier which classifies the article on the basis of the intensity of light reflected at the first and second color wavelengths, the classifier including a memory element having a plurality of storage locations therein which are utilized to define a profile of acceptable articles and to generate an article-reject signal if the reflected intensities of the first and second colors define a point outside of the profile.

EP-A-342345 discloses an apparatus for sorting objects by color. The apparatus includes a means of conveying the objects, uniformly and individually, to the interior of an illuminated analysis chamber that contains one or more sorting channels. Each sorting channel contains at least one lens group connected to photodetectors. The photodetectors are interconnected to electronic circuitry capable of transforming light reflected, transmitted or emitted by the objects into analog electrical signals that are digitized through electrical level detectors. Color analysis of the objects is based on a matrix sorting process that identifies color by comparing the above digitized electrical signals to the contents of a sorting matrix.

### SUMMARY OF THE INVENTION

An object of the invention is to provide a method and apparatus for sorting granular objects which enhances the sorting yield and in which, in order to enhance the sorting precision, the resolution power is elevated so as to be able to sort out the defective granular objects having a heavily colored portion which, even small in size, has influence to the product value, and the sorting yield is improved by not sorting out the granular objects having a defective portion which is small and only lightly colored thus having no influence to the product value. Further, the sorting process is such that only those defective granular objects which have influence to the lowering of the product value are sorted out and that the acceptable granular objects are not involved in the mix-up thus resulting in being sorted out into the unacceptable granular objects by the mix-up.

According to an aspect of the present invention, there is provided a method as claimed in claim 1 hereinafter and an apparatus as claimed in claims 5 and 6 hereinafter.

According to the invention, the picture of the granular object image-taken of the granular object is binarized by a threshold value of a first level for detecting a defective portion of a relatively light tone of color. When the defective portion of the first level is detected from the picture, for example, when a plurality of image elements each having a colored portion of a relatively light tone of color are continuously detected, and the number thereof exceeds a predetermined number, the sorting process is advanced with such portion as the defective portion, that is, the colored portion. On the other hand, when the defective portion of the first level is detected but the number thereof does not exceed the predetermined number, such portion is not treated as a defective portion and is canceled. That is, when a defective portion which does not have influence to the product value is detected, the sorting process is not advanced. Therefore, when a defective portion of a light tone of color is present, the judgment as to whether it is to be excluded or not depends on the size of such portion.

The judgment process is performed through the image processing and, when the image element signals are obtained during the scanning, if the scanning is made in the direction perpendicular to the moving direction of the granular objects, not only the number of the continuous image elements as defective portions along the scanning direction (horizontal direction) is detected but also the number of the continuous image elements as defective portions along the object flowing direction (vertical direction) is effectively detected. If the predetermined value for the horizontal direction is set, for example, to when the number exceeds the continuous 3 image elements, and the same for the vertical direction is set, for example, to when the number exceeds the continuous 2 image elements (2 columns) and, by setting not only the size in the horizontal direction of the defective portion but also the size in the vertical direction thereof, it is possible to make the judgment of the defective portion of the first level. In accordance with the elevation of the resolution power, not only the detecting precision of the defective portion of a light tone color is enhanced, but also enabled the judgment of the size thereof by the counting of the number of image elements, thus showing the effects resulting from the elevation of the resolution power. Also, irrespective of whether the arrangement is one in which the image element signals are inputted in a serial mode or one in which the signals are inputted in a parallel mode, it is possible in the image processing technique to conduct a batch process by a predetermined memory capacity by accumulating each scanning signal with the positions of the horizontal and vertical directions of the image elements of the granular object being respectively coincided with one another.

The defective portion which does not have influence to the product validity in this specification refers to such a defective portion that is not easily or readily recognized by human eye's observation and the presence of such portion does not have influence to the product validity and, despite the presence of such portion, the quality and the safety of the product can be maintained substantially and sufficiently.

The sorting process according to the invention further includes the binarizing of the image element signals from the solid-state image device by a threshold value of a predetermined luminance brightness determined for detecting a defective portion of a granular object of a second level heavier than the first level, and the advancing of a granular object sorting process with the image element that has been determined as defective one among the binarized image element signals. The first level is the threshold value for a defective portion of a light tone color and the second level is the threshold value for a defective portion of a heavy tone color. When the image element signal for the defective portion of a heavy tone color is detected, the sorting process for the related granular object is advanced irrespective of the continuing or non-continuing of the image elements. Thus, when the image element having a defective portion of a heavy tone color is detected, the related granular object is always ejected as the defective granular object.

The binarizing process using the second threshold value is carried out in parallel with the binarizing process which uses the first threshold value. The image element rendered defective by the second threshold value is also rendered defective by the first threshold value. However, in the binarization by the first threshold value, if the defective portion of a heavy tone color does not exceed the predetermined number of continuous image elements, such portion is canceled and is not rendered defective. However, by providing the second threshold value, even when the image element is non-continuous, that is, even when the image element has an extremely small defective portion which becomes detectable only by elevating the resolution power, if such defective portion is of a heavy tone color, the related image element becomes one which is judged as defective through the binarization by the second threshold value, and the related granular object is judged as defective and is ejected. Thus, the effects of the elevation of the resolution power are demonstrated.

Also, the above described method for sorting granular objects includes the steps of:
specifying granular object image elements by binarizing image element signals from the solid-state image device by a threshold value of a predetermined luminance brightness determined for detecting an outward form of a granular object;
specifying defective granular object image elements based on a defective image detected at the first level or the second level;
specifying an image element in a center location of the defective image elements based on the specified defective granular object image elements;
and outputting a sorting signal to act on the center location of the defective granular object, corresponding to the image element at the specified center location.

An outward form of a granular object is detected by a predetermined luminance brightness threshold value determined for detecting the outward form of the granular object, the luminance brightness threshold value being set separately from the above-explained first and second level threshold values. Based on the defective image elements detected by the first level and second level threshold values, more specifically, by laying the image elements at the defective portion over an aggregate of the image elements forming the outward form of the granular object, the granular object having the defective image elements is caused to be recognized as the defective granular object, and the image element at the center location of the defective granular object is specified irrespective of the image element location of the defective portion at the image element aggregation of the defective granular object. In this way, the sorting signal is outputted so as to act with respect to the center location of the defective granular object corresponding to the image element at the center location of the specified defective granular object unlike in the conventional technique in which the sorting action has been pointed to the defective portion itself of image element. Thus, wherever in the granular object the defective portion of the defective granular object may be present, it is ensured to eliminate a single defective granular object concerned.

For the step of specifying the image element at the center location of the defective granular object described above, the method includes the steps of:
providing a contracting process in vertical and horizontal directions of the image elements of the defective granular object;
dividing continuous image elements into a plurality of blocks with a predetermined number of continuous image elements as one block and enlarging the image elements that have undergone the contracting process into a plurality of block units;
specifying a center block in a horizontal direction in the plurality of blocks obtained by the enlarging process;
specifying a center block in a vertical direction in the plurality of blocks obtained by the enlarging process; and
determining a center location block of the granular object by the overlapping between the center block in the horizontal direction and the center block in the vertical direction.

With respect to the image elements of a defective granular object, the contracting process which is a method of processing of images is carried out. Since the granular objects are moving in a continuous form, the overlapping thereof at their peripheral portions are expected so that there are cases wherein one image element aggregation of each granular object cannot be specified. Thus, by the contracting process for a predetermined number of image elements, the image element aggregation is made in both the vertical and horizontal directions and, in this way, the overlapping of the granular objects is solved and it is possible to specify one granular object image element. After the granular objects are made, by the contracting process, image element aggregations individually independent from each other, a predetermined number of image elements, for example, continuous image elements are divided into 1 block each and, within 1 division, even if 1 image element of the granular object is present, 1 block in its entirety is enlarged as the granular object image element. That is, the image element aggregation of the granular objects becomes an image element block aggregation

By the aggregation of a plurality of blocks of the enlarged image elements as above, the center block in the vertical direction and the center block in the horizontal direction are specified. When there are blocks of even number in the horizontal direction, 2 blocks are selected as the center blocks, and when there are blocks of odd number in the horizontal direction, 1 block is selected as the center block. By overlapping the center blocks in the vertical and horizontal directions selected as above, it is possible to specify the center blocks of the granular objects. Since the location of the center block becomes the center location of the given granular object, and it is possible to specify on the image elements the center location in the flow direction of the granular object, the sorting signal is outputted such that the sorting action is directed to the center location of the related image element.

In the above, a predetermined continuous plurality of blocks constitute 1 division and, when any one of the blocks within the division comes to the center location, the sorting signal is outputted to the sorting location corresponding to such division. Normally, the sorting means for granular objects is configured such that, for example, a plurality of ejectors are provided substantially in one line. The divisions each constituting a plurality of blocks are assigned sequentially to the individual jet air ejecting means from one end to the other end thereof. When the center location of the defective granular object exists in any of the plurality of blocks, the sorting signal is outputted to the jet air ejecting means corresponding to such division and the jet air ejecting means is activated accordingly.

### BRIEF DESCRIPTION OF THE DRAWINGS

The above and other objects, features and advantages of the present invention will be apparent from the following description of preferred embodiments of the invention explained with reference to the accompanying drawings, in which:
Fig. 1 is a diagrammatic side sectional view of the granular object sorting apparatus according to the invention;
Fig. 2 is a diagram showing the relationship among chutes, nozzles and sensor elements of the granular object sorting apparatus according to the invention;
Fig. 3 is a block diagram of a circuit for conducting signal processing of a signal from a CCD sensor, of the granular object sorting apparatus according to the invention;
Fig. 4(a) is a diagram showing a signal received by the CCD sensor and Figs. 4(b), (c) and (d) show its binarized signals respectively according to the invention;
Fig. 5 is a block diagram of a circuit for conducting signal processing of a signal from an InGaAs sensor, of the granular object sorting apparatus according to the invention;
Figs. 6(a) and (b) show image-processing images of detected colored portions according to the invention;
Figs. 7(a) - 7(h) show image-processing images of an outward form of a rice grain detected according to the invention; and
Fig. 8 is a flow chart of image processing according to the invention.

### PREFERRED EMBODIMENTS OF THE INVENTION

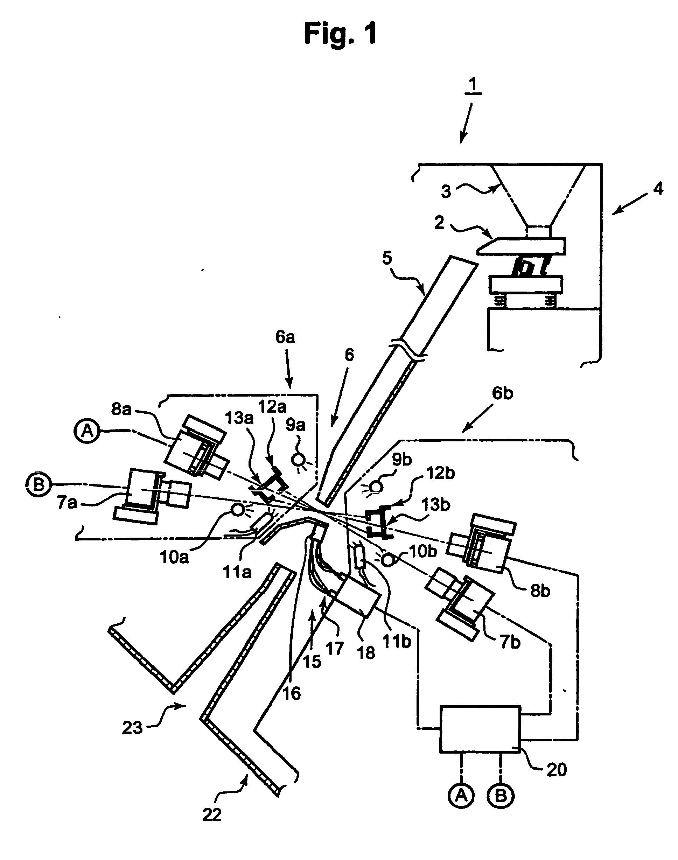

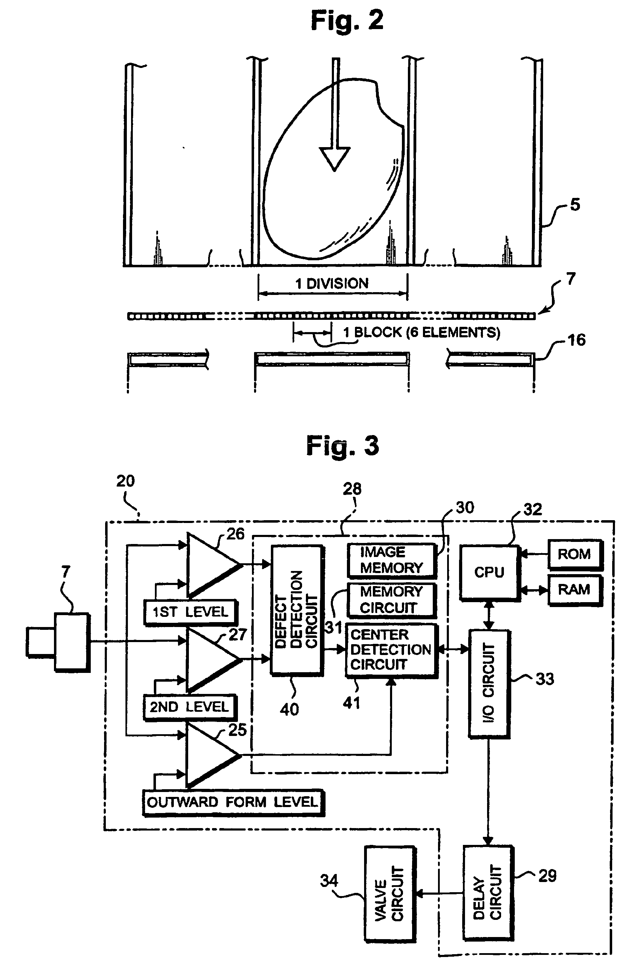

The outline of the granular object sorting apparatus according to the invention is explained with reference to Figs. 1 and 2. The sorting apparatus explained herein is one in which, for grains among granular objects, especially rice grains as materials to be sorted, the sorting or ejection is made for rice grains having colored portions or foreign objects mixed in rice grains. Fig. 1 is a sectional view diagrammatically showing main elements and their internal structural arrangement of the granular object sorting apparatus. The apparatus is equipped, at its upper portion thereof, with a rice grain supplying section 4 which has a vibration feeder means 2 and a tank section 3, and a chute 5 which is in an inclined plate-like form and transfers in a predetermined locus the rice grains supplied from the vibration feeder means 2. By this chute 5 the rice grains are supplied and released to an optical detecting section 6 to follow.

The optical detecting section 6 is substantially symmetrical with respect to the locus of the rice grains released from the chute 5, and constitutes a front optical detection section 6a and a rear optical detection section 6b. Each of the front and the rear optical detection section 6a and 6b is provided, at the front and rear with respect to the viewing point O in the falling locus of the rice grains, with a visual ray receiving section 7a, 7b equipped with a CCD sensor having as an image element, for example, a silicon sensor, and a near infrared ray receiving section 8a, 8b equipped with an analog sensor constituted by an InGaAs element. The visual ray receiving section 7a, 7b and the near infrared ray receiving section 8a, 8b are provided correspondingly to the width direction of the chute 5. There are also provided illuminating fluorescent lamps 9a, 9b and 10a, 10b, illuminating halogen lamps 11a, 11b, and background plates 12a, 12b corresponding to the respective optical detection sections 6a and 6b. In the background plates 12a, 12b, there are provided openings 13a, 13b so as not to interrupt the viewing line between the light receiving sections 8a, 8b and the viewing point 0. The visual ray receiving section 7 may be configured advantageously by a wide angle camera equipped with a converging lens.

The sorting section 15 is disposed under the optical detecting section 6 along the direction in which the rice grains fall down, and a plurality of nozzles 16 for emitting high speed jet air against the rice grains are provided in the width direction of the chute 5. To each of the nozzles 16 is connected a valve 18 which allows the compressed air to be supplied to the nozzles 16 through air pipes 17, and the valve 18 is connected to the compressed air supplying means (not illustrated).

The light receiving sections 7 and 8 are connected to the valve 18 through a control unit 20 explained later, and the signals received from the rice grains or foreign objects through the light receiving sections 7, 8 are processed by the control unit 20. When the defective rice grains having colored portions or the foreign objects are detected, the signals to activate the related valves 18 are outputted. When the valve 18 is activated accordingly, the defective rice grains or the foreign objects are ejected from the grain falling locus by the air jetted from the nozzle 16 and are discharged from the unacceptable object outlet 22. The acceptable grains, that is, the grains that have not been ejected, are discharged to the outside from the acceptable object outlet 23 along the rice grain falling locus.

Fig. 2 is an enlarged view which is seen from the front side of the chute 5 and which diagrammatically shows the positions and arrangements of the chute 5, the light receiving section 7 and the nozzles 16 arranged in the width direction. The chute 5 is divided into a plurality of divisions each having, for example, a predetermined width, and a nozzle 16 is assigned to each division of the chute 5. The width of the nozzle 16 is preferably 1.5 - 2mm in the case of the rice grains. In this example, in the light receiving section 7, six light receiving sensor elements constitute one block, and 4 blocks are assigned to 1 nozzle. That is, in this example, with the 24 elements, the quantity of light of the rice grains flowing in 1 division of the chute 5 is received. That is, as to the image elements, there are 24 image elements in the horizontal direction for each nozzle. When the images of the rice grains are taken, the images are obtained by conducting the scanning in the perpendicular direction with respect to the flow of the rice grains.

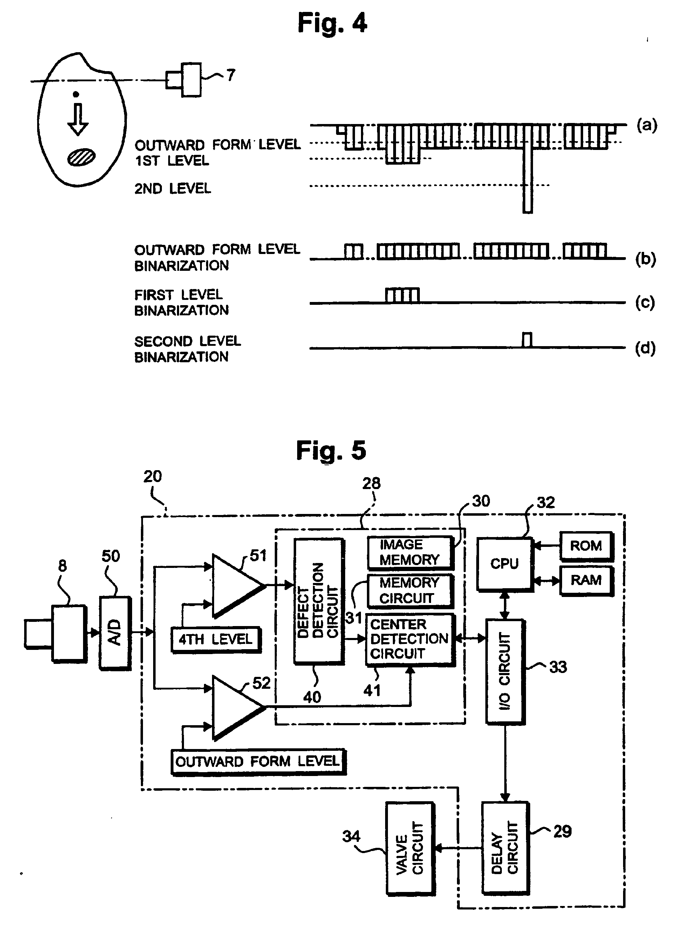

Next, with reference to Fig. 3 and Fig. 4, the control unit 20 which processes the signals outputted from the light receiving sections 7, 8 is explained. The control unit 20 is equipped with a comparator 25 to which a threshold value corresponding to the outward form of the object is inputted, a comparator 26 to which a threshold value corresponding to a comparatively light tone color (a first level) is inputted, a comparator 27 to which a threshold value corresponding to a comparatively heavy tone color (a second level) is inputted, an image processing board 28 which image-processes the signals from the above comparators, and a delay circuit 29 in which are inputted the sorting signals outputted based on the output signals from the image processing board 28. Other elements such as an image memory 30 which is necessary for image processing and a memory circuit 31 which stores the processing program are of course included in the control unit 20, but they are not described in detail as they may appropriately be designed and provided. Also, as to the CPU 32 and the input/output circuit 33, they may be variously designed such as one with which the control is made individually at the processing stage or one in which the control is made totally by one CPU, so that only one example is shown here and no details are illustrated. The valve circuit 34 is operated by the signals outputted from the delay circuit 29.

The control unit 20 receives a plurality of image element signals outputted from the CCD sensor of the light receiving section 7. The image element signals are respectively forwarded to the comparators 25, 26, 27 and are binarized by the respective threshold values. Of the binarized signals, the signals from the comparators 26 and 27 are subjected to the defect detection by a defect detecting circuit 40 in the image processing board 28, and the presence or non-presence of the defect signal is confirmed thereat. If any defect signal is detected, the center detection by the center detecting circuit 41 is conducted. Fig. 4(a) shows an example of a digital signal in which a part thereof is omitted and which is outputted from the CCD sensor with respect to 1 rice grain. In this illustrated example, in one rice grain, there is a colored portion which is of a comparatively light tone color and is of a wide range color, and also there is a colored portion which is of a comparatively heavy tone color but is of a small range color. In Fig. 4(a), there are also shown three levels of the threshold values of the three different comparators 25, 26 and 27. When the signals as in Fig. 4(a) are inputted to each of the comparators 25, 26, 27, the signal outputted from each of the comparators 25, 26, 27 becomes the binarized signal as shown in examples of Figs. 4(b), (c) and (d). The binarized signals thus produced are sequentially stored in the image memory 30 of the image processing board 28. The comparators 25, 26, 27 have been shown as separate circuits, but the related processes may be incorporated into a part of the program so that they may be conducted at the image processing board 28.

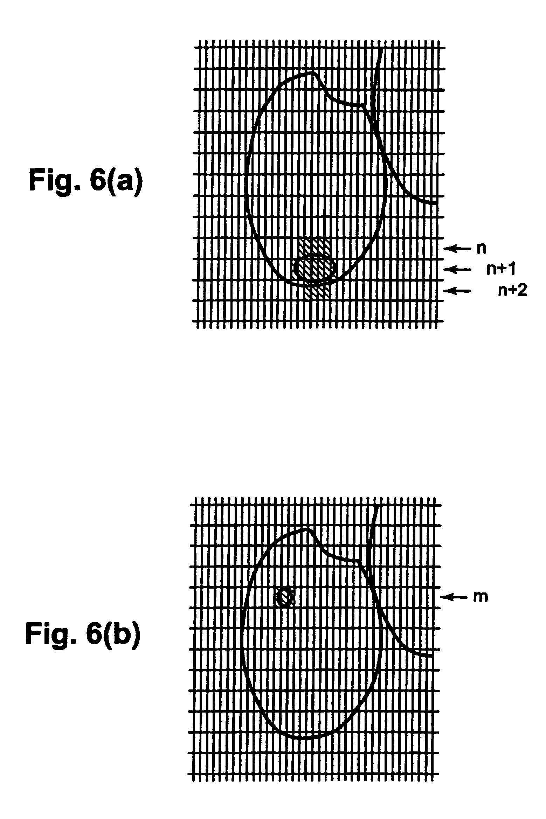

When the output is an analog signal as in an ordinary InGaAs sensor, by providing an analog/digital converter circuit 50 as shown in Fig. 5, the signal processing can be carried out similarly as in the above control unit 20. However, the comparator 51 is one in which the fourth threshold value for sorting out the foreign objects (glass, resin and pebble) is established. It is advantageous if the comparator 52 is provided with the threshold value set in advance for detecting the outward form level for the foreign objects and, by the binarized signal thereof, the signal is made a signal for specifying the outward form as in the above.

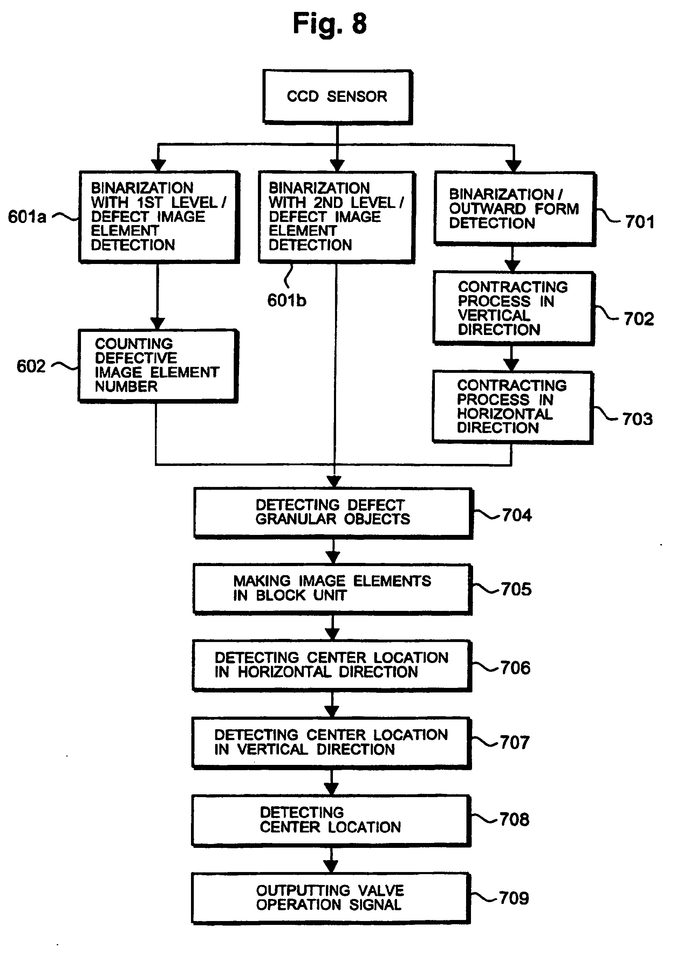

Now, the image processing by the control unit 20 is explained with reference to Fig. 6 to Fig. 8. The data outputted from the CCD sensor 7, for example, 12 bits outputted in parallel, may be converted to serial data of 8 bits. The data from the CCD sensor 7 thus converted are subjected to the binarization process by the threshold values (the first level, the second level) for the colored portions set in advance at the comparators 26, 27 (Steps 601a, 601b) and to the binarization process by the outward form threshold value set in advance at the comparator 25 (Step 701). Fig. 6(a) shows only a part of the data obtained by a plurality of scannings and only one example of the data binarized by the first level. Similarly the data binarized by the second level are obtained.

Next, the signal processing at the image processing board 28 (see Fig. 3) is explained. This processing is performed in accordance with the program stored in advance in the memory circuit 31 of the image processing board 28. In the initial setting at the image processing of the data binarized by the comparator 26 of the first level, the conditions or ranges of the unacceptable rice grain are set as follows. That is, the number of continuous image elements in the scanning direction (horizontal direction) is 3, and the number of continuous image elements in the flowing direction (vertical direction) is 2. When this is applied to Fig. 6(a), the number of continuous image elements in the horizontal direction at the n'th scanning is 5, the same at the n+1 scanning is 7, and the same at the n+2 is 4 and, at any of these scannings, the number exceeds the initially set number 3 of the continuous image elements in the horizontal direction and thus the grain concerned falls under the unacceptable grains. Also, the initially set number 2 of the continuous image elements in the vertical direction is also exceeded so that the aggregation of the image elements detected here are judged as image elements of the unacceptable grain (Step 602). Further, in the example of Fig. 6(b), the number of image elements continuous in the horizontal direction at the m'th scanning is 3 so that the initially set number 3 of the continuous image elements in the horizontal direction is not exceeded, and no continuous image elements in the vertical direction are present. Thus the image elements in aggregation are not judged as those of the unacceptable grain, and are canceled. In the defective grain image element detected in the data binarized by the comparator 27 of the second level, the threshold value is different from that of the first level and, since the defective image element represents a heavier tone of color, it is judged as it is as defective.

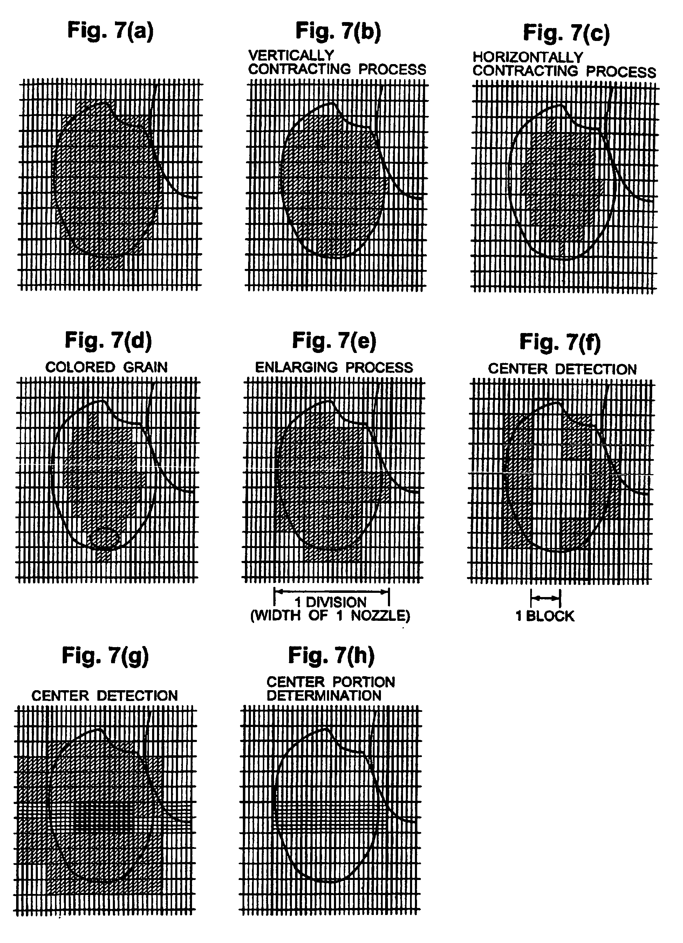

Simultaneously with the processing of the binarized data for the colored portion, the outward form processing of the rice grain as shown in Fig. 7(a) to Fig. 7(b) is conducted. Fig. 7(a) shows a signal obtained by the comparator 25 of the outward form level. The signal is one in which the outward form signal of the rice grain has been subjected to a simple binarizing process (Step 701). The contracting process of the form is followed. In the contracting process, as shown in Fig. 7(b), the peripheral image elements in the vertical direction are canceled uniformly one by one (Step 702). Then, as shown in Fig. 7(c), the peripheral image elements in the horizontal direction are canceled uniformly by 3 image elements at a time (Step 703). The number of image elements canceled here is not limited to the examples and may be set optionally. This process enables the solving of connection with other rice grain image elements and it is possible to confirm the outward form of an individual rice grain.

The colored image elements (Fig.6(a)) detected at the Steps 601a and 601b and the outward image elements (Fig. 7(c)) of the rice grain obtained up to the Step 703 are completely overlapped with each other (Fig. 7(d)) and, in this way, the outward form of the colored grain in its entirety can be confirmed (Step 704).

Next, in the same way of dividing of the sensor elements of the light receiving section 7 already explained with reference to Fig. 2 in which the sensor elements are divided such that, along the width extent of the nozzles 16 in the horizontal direction, 6 elements are in 1 block and 4 blocks are in 1 division, the image processing may be carried out such that, along the width of the nozzle 16 the entire elements are converted into block units with 6 image elements being treated as 1 block. Even if, within 1 block consisting 6 image elements, 1 defective grain image element is present, the block concerned in its entirety becomes the defective block and is subjected to an enlarging process (Step 705, Fig. 7(e)).

The detection of the center location of the object is performed in the following ways. First, the detection of the center location in the horizontal direction is performed such that, based on the data of Fig. 7(e), each block data is enlarged by being subjected to the OR logic calculation with the block data of above and below, and the center in the horizontal direction is obtained by the pattern matching. When there are even number data in the horizontal direction, 2 blocks in the center constitute the center location, and when there are odd number data, 1 block in the center constitutes the center location (Step 706, Fig. 7(f)). Further, the detection of the center location in the vertical direction is performed such that, based on the data of Fig. 7(e), each block data is enlarged by being subjected to the OR logic calculation with the block data of right and left, and the center in the the vertical direction is obtained by the pattern matching. When there are even number data in the vertical direction, 2 blocks in the center constitute the center location, and when there are odd number data, 1 block in the center constitutes the center location (Step 707, Fig. 7(g)). In this way, when the center locations respectively in the horizontal direction and the vertical direction are calculated by the logical AND, the 4 blocks (checked pattern blocks) in the center as shown in Fig. 7(g) are obtained (Step 708). When the blocks in the center are obtained, the division in which these blocks exist is determined (Fig. 7(h)), and the nozzle 16 corresponding to this division is determined. The operating signal is sent to the valve 18 to which the nozzle 16 is connected (Step 709).

The operating signal is outputted such that the jet air from the nozzle 16 corresponding to the division in which the block of the calculated center location exists so that, as in Fig. 7(g), the center block exists in 1 division, the center location is determined as existing in such division. However, when the center block extends into 2 divisions in the horizontal direction, the operating signal is sent to the valve 18 so that the air is jetted out from the two nozzles corresponding to the 2 divisions.

The operation signals for the electromagnetic valve are sent to the valve 18 after the jet timing is adjusted based on the center location of the defective image elements in the entire image, after the set jet time is added, after jet timing of the nozzle 16 is set, and after a predetermined delay time is adjusted by the delay circuit 29 based on the distance between the light receiving section 7 and the nozzle 16.

The above has explained mainly the processing of the signals received from the CCD sensor at the light receiving section 7, but the processing of the signals received from the InGaAs sensor at the light receiving section 8 is similarly conducted provided that the sensor has the satisfactory resolution power. As to the detection of foreign objects, the presence of the foreign object is confirmed through the binarization by the comparator 51 to which a fourth level of threshold value is set in advance, and the outward form of the foreign object is confirmed through the binarization by the comparator 52 to which the outward from level is set in advance. Depending on the kinds of foreign objects, the data binarized by the comparator 51 of the fourth level can be used as it is as the outward form data. This is because there are no plurality of levels in the tone of color unlike in the colored portions detected by the CCD sensor.

As above, since the resolution power of the sensor has been elevated thus enabling to detect colored portions of various sizes, and since the size of the colored portion can be specified by the number of image elements, it is made possible by the elevated resolution power not only to enhance the precision in the detection of a defective portion in the form of light tone of color but also to enable the judging of the size thereof by being able to count the image elements. Thus, the elevated resolution power has demonstrated the effects and advantages.

Since the second threshold value has been set for the judgment of the colored portion in a heavy tone of color, even such a small defective portion that can be detected only by the elevation of the resolution power can be judged as defective by the binarization through the second threshold value if such defective portion is of a heavy tone of color, and the granular object concerned is judged as defective and ejected. Thus, the elevated resolution power has demonstrated the effects.

After an outward form of a granular object is detected and by laying the image element at the defective portion over an aggregate of the image elements forming the outward form of the granular objects, the granular object having the defective image element is caused to be recognized as the defective granular object, and the image element at the center location of the defective granular object is specified irrespective of the image element location of the defective portion at the image element aggregation of the defective granular objects. In this way, the sorting signal is outputted so as to act with respect to the center location of the defective granular object, corresponding to the image element at the center location of the specified defective granular object unlike in the conventional technique in which the sorting action has been pointed to the defective portion itself of image element. Thus, wherever in the granular object the defective portion of the defective granular object may be present, it is ensured to ejected a single defective granular object concerned.

Only those defective granular objects that will have substantial influence to the product value are effectively eliminated. This has been made possible by using a sensor having a high resolution power so as to detect a defective portion of a small size, by being able to determine the presence of defects by counting the number of image elements of the defective portions which are obtained by establishing threshold values for defective portions of light tone of colors, and further by establishing threshold values for defective portions of heavy tone of colors so that the judgement for defective portions can be made irrespective of sizes of the defective portions.

Also, in addition to the judgment of defective granular objects, it has been made possible to obtain the precise center location of the defective granular object so that, irrespective of where the defective portion may be present in the granular object, the sorting action can be directed substantially to the center portion of the granular object so that the chances of involving other granular objects to be subjected to the sorting action have become small. Thus, in order to enhance the sorting precision, the resolution power is elevated so as to be able to sort out the defective granular objects having a heavily colored portion which, even small in size, has influence to the product value, and the sorting yield is improved by not sorting out the granular objects having a defective portion which is small and only lightly colored thus having no influence to the product value.

While the invention has been described in its preferred embodiments, it is to be understood that the words which have been used are words of description rather than limitation and that changes within the purview of the appended claims may be made without departing from the true scope of the invention as defined by the claims.

## Claims

1. A method for sorting granular objects comprising: image-taking, by a solid-state image device having a plurality of image elements, while granular objects flowing in a continuous form are being irradiated by light;
binarizing image element signals from said solid-state image device by a threshold value of a predetermined luminance brightness determined for detecting a defective portion of a granular object of a first level;
binarizing the image element signals from said solid-state image device by a threshold value of a predetermined luminance brightness determined for detecting a defective portion of a granular object of a second level which is heavier than said first level;
detecting a defective image element signal from the binarized image element signals;
determining as defective when the number of continuous defective image element signals corresponding to the first level exceeds a predetermined number, and canceling defective image element signals corresponding to the first level when the number of such signals does not exceed said predetermined number, whereas determining as defective when the defective image element signal corresponding to the second level irrespective of the number of such signals is detected; and
advancing a granular object sorting process with those granular objects that have been determined as defective.

2. A method for sorting granular objects according to claim 1, which further includes the steps of:
specifying granular object image elements by binarizing the image element signals from said solid-state image device by a threshold value of a predetermined luminance brightness determined for detecting an outward form of a granular object;
specifying defective granular object image elements based on defective image elements detected at the first level or the second level;
specifying an image element of a center location of the defective granular object based on the specified defective granular object image elements; and
outputting a sorting signal to act on said center location of the defective granular object corresponding to the image element at the specified center location.

3. A method for sorting granular objects according to claim 2, in which said step of specifying the image element of the center location of the defective granular object includes the steps of:
providing a contracting process in vertical and horizontal directions of the defective granular object image elements;
dividing continuous image elements into a plurality of blocks with a predetermined number of continuous image elements forming one block, and enlarging in a block unit the image elements that have undergone the contracting process;
specifying a center block in the horizontal direction in the plurality of blocks obtained by said enlarging process;
specifying a center block in the vertical direction in the plurality of blocks obtained by said enlarging process; and
determining a center location block by the overlapping between the center block in the horizontal direction and the center block in the vertical direction.

4. A method for sorting granular objects according to claim 3, in which when a predetermined plurality of continuous blocks form one division and any block within the division has become the center location, a sorting signal is outputted for the sorting location corresponding to said division.

5. An apparatus for sorting granular objects comprising: a transfer means (4,5) for transferring granular objects in a continuous form; an illuminating means (9a, 9b; 10a, 10b; 11a, 11b) for illuminating the granular objects being transferred; a solid-state image device (7a,7b;8a,8b) for image-taking the granular objects being illuminated;
a first binarizing means (26) for taking out a defective portion of a first predetermined heaviness from the image signal from the solid-state image device;
a second binarizing means (25) for taking out a shape of a given granular object from the image signal from solid-state image device;
a third binarizing means (27) for taking out a defective portion of a second predetermined heaviness which is heavier than the first predetermined heaviness;
an image processing means (28) equipped with a center detection circuit (41) for extracting a center location of the shape of the given granular object by the second binarizing means (25) with respect to the defective granular objects which, within the defective portions taken out by the first binarizing means (26), contain a defective portion which is within a predetermined size but is to be canceled and a defective portion which is not to be canceled by a defect detection circuit (40), and with respect to the defective granular object determined by the third binarizing means (27);
a delay means (29) for outputting a signal after elapsing of a delay time which is calculated from the transferring time of the given granular object and the center location of said granular object; and
a sorting means (34) which acts on the center location of the defective granular object based on the output signal from said delay means (29).

6. An apparatus for sorting granular objects according to claim 5, in which said image Processing means (28) includes:
means to contract defective granular object image elements in vertical and horizontal directions;
means to divide continuous images into a plurality of blocks with a predetermined number of continuous images forming one block, and to enlarge in a block unit the image elements that have undergone the contracting process; and
means to calculate the center of the defective granular object in the horizontal direction in the plurality of blocks obtained by the enlarging process and the center in the vertical direction in the plurality of blocks obtained by the enlarging process, and to extract the center location of the granular object based on the calculated centers in both the horizontal and vertical directions.

## Patentansprüche

1. Verfahren zum Sortieren von körnigen Objekten bzw. Gegenständen, umfassend:
ein Bildaufnehmen durch eine Festkörper-Bildvorrichtung, die eine Mehrzahl von Bildelementen aufweist, während körnige Objekte, welche in einer kontinuierlichen Form fließen, durch Licht bestrahlt werden;
Binärisieren von Bildelementsignalen von der Festkörper-Bildvorrichtung durch einen Schwellwert einer vorbestimmten Luminanz bzw. Helligkeit, die zum Detektieren eines defekten Abschnitts eines körnigen Objekts eines ersten Niveaus bestimmt wird;
Binärisieren der Bildelementsignale von der Festkörper-Bildvorrichtung durch einen Schwellwert einer vorbestimmten Luminanz bzw. Helligkeit, die zum Detektieren eines defekten Abschnitts eines körnigen Objekts eines zweiten Niveaus bestimmt wird, welche schwerer als das erste Niveau ist;
Detektieren eines defekten Bildelementsignals aus den binärisierten Bildelementsignalen;
Bestimmen als defekt, wenn die Anzahl von kontinuierlichen defekten Bildelementsignalen entsprechend dem ersten Niveau eine vorbestimmte Zahl überschreitet, und Löschen von defekten Bildelementsignalen entsprechend dem ersten Niveau, wenn die Anzahl von derartigen Signalen nicht die vorbestimmte Anzahl übersteigt, während sie als defekt bestimmt werden, wenn das defekte Bildelementsignal entsprechend dem zweiten Niveau unabhängig von der Anzahl von derartigen Signalen detektiert wird; und
Weiterführen eines Verfahrens zum Sortieren eines körnigen Objekts mit jenen körnigen Objekten bzw. Gegenständen, welche als defekt bestimmt wurden.

2. Verfahren zum Sortieren von körnigen Objekten nach Anspruch 1, welches weiterhin die Schritte enthält:
Spezifizieren von Bildelementen eines körnigen Objekts durch ein Binärisieren der Bildelementsignale von der Festkörper-Bildvorrichtung durch einen Schwellwert einer vorbestimmten Luminanz bzw. Helligkeit, die zum Detektieren einer nach außen gerichteten bzw. Außenform eines körnigen Objekts bestimmt wird;
Spezifizieren von Bildelementen eines defekten, körnigen Objekts basierend auf defekten Bildelementen bzw. Elementen eines defekten Bilds, die im ersten Niveau oder im zweiten Niveau detektiert werden;
Spezifizieren eines Bildelements eines zentralen Orts des defekten, körnigen Objekts basierend auf den spezifizierten Bildelementen des defekten, körnigen Objekts; und
Ausgeben eines Sortiersignals, um auf den zentralen Ort des defekten, körnigen Objekts entsprechend dem Bildelement mit dem spezifizierten zentralen Ort zu wirken.

3. Verfahren zum Sortieren von körnigen Objekten nach Anspruch 2, wobei der Schritt eines Spezifizierens des Bildelements des zentralen Orts des defekten, körnigen Objekts die Schritte enthält:
Bereitstellen eines Kontraktionsverfahrens in vertikaler und horizontaler Richtung der Bildelemente des defekten, körnigen Objekts;
Unterteilen von kontinuierlichen Bildelementen in eine Mehrzahl von Blöcken mit einer vorbestimmten Anzahl von kontinuierlichen Bildelementen, die einen Block ausbilden, und Vergrößern in einer Blockeinheit der Bildelemente, welche dem Kontraktionsverfahren unterworfen wurden;
Spezifizieren eines zentralen Blocks in der horizontalen Richtung in der Mehrzahl von Blöcken, die durch das Vergrößerungsverfahren erhalten wurden:
Spezifizieren eines zentralen Blocks in der vertikalen Richtung in der Mehrzahl von Blöcken, die durch das Vergrößerungsverfahren erhalten werden; und
Bestimmen eines Blocks eines zentralen Orts durch das Überlappen zwischen dem zentralen Block in der horizontalen Richtung und dem zentralen Block in der vertikalen Richtung.

4. Verfahren zum Sortieren von körnigen Objekten nach Anspruch 3, in welchem, wenn eine vorbestimmte Mehrzahl von kontinuierlichen Blöcken eine Unterteilung bildet und jeder Block innerhalb der Unterteilung der zentrale Ort geworden ist, ein Sortiersignal für den Sortierort entsprechend der Unterteilung ausgegeben wird.

5. Vorrichtung zum Sortieren von körnigen Objekten bzw, Gegenständen, umfassend: Transfer- bzw. Übertragungsmittel (4, 5) zum Übertragen von körnigen Objekten in einer kontinuierlichen Form; Beleuchtungsmittel (9a, 9b; 10a, 10b; 11a, 11b) zum Beleuchten der körnigen Objekte, die transferiert bzw. übertragen werden; eine Festkörper-Bildvorrichtung (7a, 7b; 8a, 8b) zum Bildaufnehmen der körnigen Objekte, die erleuchtet bzw. beleuchtet sind;
erste Binärisiermittel (26) zum Entnehmen eines defekten Abschnitts einer ersten, vorbestimmten Schwere von dem Bildsignal von der Festkörper-Bildvorrichtung;
zweite Binärisiermittel (25) zum Entnehmen einer Form bzw. Gestalt eines gegebenen, körnigen Objekts von dem Bildsignal von der Festkörper-Bildvorrichtung;
dritte Binärisiermittel (27) zum Entnehmen eines defekten Abschnitts einer zweiten, vorbestimmten Schwere, welche schwerer als die erste, vorbestimmte Schwere ist;
Bildbearbeitungsmittel (28), die mit einem Zentrums-Detektionsschaltkreis (41) ausgestattet sind, zum Extrahieren eines zentralen Orts der Form des gegebenen, körnigen Objekts durch die zweiten Binärisiermittel (25) in bezug auf die defekten, körnigen Objekte, welche in bzw. innerhalb den defekten Abschnitten, die durch die ersten Binärisiermittel (26) entnommen sind, einen defekten Abschnitt, welcher innerhalb einer vorbestimmten Größe ist, jedoch zu löschen ist, und einen defekten Abschnitt enthalten, welcher nicht durch eine Defekt-Detektionsschaltung (40) zu löschen ist, und in bezug auf das defekte, körnige Objekt, das durch die dritten Binärisiermittel (27) bestimmt ist;
Verzögerungsmittel (29) zum Ausgeben eines Signals nach Ablauf bzw. Verstreichen einer Verzögerungszeit, welche von der Übertragungszeit des gegebenen, körnigen Objekts und dem zentralen Ort des körnigen Objekts berechnet ist: und
Sortiermittel (34), welche auf den zentralen Ort des defekten, körnigen Objekts basierend auf dem Ausgabesignal von den Verzögerungsmitteln (29) wirken.

6. Vorrichtung zum Sortieren von körnigen Objekten nach Anspruch 5, in welcher die Bildbearbeitungsmittel (28) beinhalten:
Mittel zum Kontrahieren von Bildelementen des defekten, körnigen Objekts in vertikaler und horizontaler Richtung;
Mittel zum Unterteilen von kontinuierlichen Bildern in eine Mehrzahl von Blöcken mit einer vorbestimmten Anzahl von kontinuierlichen Bildern, die einen Block ausbilden, und zum Vergrößern der Bildelemente, welche dem Kontraktionsverfahren unterworfen wurden, in einer Blockeinheit; und
Mittel zum Berechnen des Zentrums des defekten, körnigen Objekts in der horizontalen Richtung in der Mehrzahl von Blöcken, die durch das Vergrößerungsverfahren erhalten werden, und des Zentrums in der vertikalen Richtung in der Mehrzahl von Blökken, die durch das Vergrößerungsverfahren erhalten werden, und um den Ort des Zentrums bzw. des zentralen Orts des körnigen Objekts, basierend auf den berechneten Zentren in sowohl der horizontalen als auch der vertikalen Richtung, zu extrahieren.

## Revendications

1. Procédé de tri d'objets granulaires comprenant :
la prise d'images par un dispositif de traitement d'images à semiconducteurs comportant une pluralité d'éléments d'image, alors que des objets granulaires circulant sous une forme continue sont irradiés par la lumière ;
la binarisation de signaux d'éléments d'image à partir dudit dispositif de traitement d'images à semiconducteurs par une valeur de seuil d'une brillance de luminance prédéterminée, déterminée pour détecter une partie déficiente d'un objet granulaire d'un premier niveau ;
la binarisation des signaux d'éléments d'image à partir dudit dispositif de traitement d'images à semiconducteurs par une valeur de seuil d'une brillance de luminance prédéterminée, déterminée pour détecter une partie déficiente d'un objet granulaire d'un deuxième niveau qui est plus important que ledit premier niveau ;
la détection d'un signal d'élément d'image déficient à partir des signaux d'éléments d'image binarisés ;
la détermination d'une déficience lorsque le nombre de signaux continus d'éléments d'image déficients correspondant au premier niveau dépasse un nombre prédéterminé, et l'annulation des signaux d'éléments d'image déficients correspondant au premier niveau lorsque le nombre de ces signaux ne dépasse pas ledit nombre prédéterminé, alors que la détermination d'une déficience lorsque le signal d'élément d'image déficient correspondant au deuxième niveau quel que soit le nombre de ces signaux est détectée ; et
le déroulement d'un procédé de tri d'objets granulaires avec ces objets granulaires qui ont été déterminés comme étant déficients.

2. Procédé de tri d'objets granulaires selon la revendication 1, qui comprend, en outre, l'étape consistant à :
spécifier des éléments d'image d'objet granulaire en binarisant les signaux d'élément d'image à partir dudit dispositif de traitement d'images à semiconducteurs par une valeur de seuil d'une brillance de luminance prédéterminée, déterminée pour détecter une forme extérieure d'un objet granulaire ;
spécifier des éléments d'image d'objets granulaires déficients sur la base d'éléments d'image déficients détectés au premier seuil ou au deuxième seuil ;
spécifier un élément d'image d'un emplacement central de l'objet granulaire déficient sur la base des éléments d'image spécifiés d'objets granulaires déficients ; et
émettre un signal de sortie afin d'agir sur ledit emplacement central de l'objet granulaire déficient correspondant à l'élément d'image à l'emplacement central spécifié.

3. Procédé de tri d'objets granulaires selon la revendication 2, dans lequel ladite étape de spécification de l'élément d'image de l'emplacement central de l'objet granulaire déficient comprend les étapes consistant à :
fournir un procédé de contraction dans des directions verticale et horizontale des éléments d'image d'objets granulaires déficients ;
diviser des éléments d'image continus en une pluralité de blocs ayant un nombre prédéterminé d'éléments d'image continus formant un bloc, et agrandir dans une unité de blocs les éléments d'image qui ont subi le procédé de contraction ;
spécifier un bloc central dans la direction horizontale selon la pluralité de blocs obtenus avec ledit procédé d'agrandissement ;
spécifier un bloc central dans la direction verticale selon la pluralité de blocs obtenus avec ledit procédé d'agrandissement ; et
déterminer un bloc d'emplacement central par le chevauchement entre le bloc central dans la direction horizontale et le bloc central dans la direction verticale.

4. Procédé de tri d'objets granulaires selon la revendication 3, dans lequel, lorsqu'une pluralité prédéterminée de blocs continus forme une division et qu'aucun bloc à l'intérieur de la division n'est devenu l'emplacement central, un élément de tri est émis pour l'emplacement de tri correspondant à ladite division.

5. Dispositif de tri d'objets granulaires comprenant un moyen de transfert (4,5) pour transférer des objets granulaires sous une forme continue ; un moyen d'éclairage (9a, 9b ; 10a, 10b; 11a, 11b) pour éclairer les objets granulaires qui sont transférés ; un dispositif de traitement d'images à semiconducteurs (7a, 7b ; 8a, 8b) pour une prise d'images des objets granulaires qui sont éclairés ;
un premier moyen de binarisation (26) pour retirer une partie déficiente d'une première importance prédéterminée du signal d'image provenant du dispositif de traitement d'images à semiconducteurs ;
un deuxième moyen de binarisation (25) pour retirer une forme d'un objet granulaire donné du signal d'image provenant du dispositif de traitement d'images à semiconducteurs ;
un troisième moyen de binarisation (27) pour retirer une partie déficiente d'une deuxième importance prédéterminée qui est plus grande que la première importance prédéterminée ;
un moyen de traitement d'images (28) comportant un circuit de détection de centres (41) pour extraire un emplacement central de la forme de l'objet granulaire donné par le deuxième moyen de binarisation (25) par rapport aux objets granulaires déficients qui, à l'intérieur des parties déficientes retirées par le premier moyen de binarisation (26), contiennent une partie déficiente qui correspond à une dimension prédéterminée, mais qui doit être annulée, et une partie déficiente qui ne doit pas être annulée par un circuit de détection de défauts (40), et par rapport à l'objet granulaire déficient déterminé par le troisième moyen de binarisation (27) ;
un moyen de temporisation (29) pour émettre un signal après l'écoulement d'un temps de temporisation qui est calculé à partir du temps de transfert de l'objet granulaire donné et de l'emplacement central dudit objet granulaire ; et
un moyen de tri (34) qui agit sur l'emplacement central de l'objet granulaire déficient sur la base du signal de sortie provenant dudit moyen de temporisation (29).

6. Dispositif de tri d'objets granulaires selon la revendication 5, dans lequel ledit moyen de traitement d'images (28) comprend :
un moyen pour contracter des éléments d'image d'objets granulaires déficients dans des directions verticale et horizontale ;
un moyen pour diviser des images continues en une pluralité de blocs ayant un nombre prédéterminé d'images continues formant un bloc, et pour agrandir dans une unité de blocs les éléments d'image qui ont subi le procédé de contraction ; et
un moyen pour calculer le centre de l'objet granulaire déficient dans la direction horizontale dans la pluralité de blocs obtenus avec le procédé d'agrandissement, et le centre dans la direction verticale dans la pluralité de blocs obtenus avec le procédé d'agrandissement, et pour extraire l'emplacement central de l'objet granulaire sur la base des centres calculés dans les deux directions horizontale et verticale.
